(19) Europäisches Patentamt
European Patent Office
Office européen des brevets

(11) **EP 4 679 334 A1**

(12) **EUROPEAN PATENT APPLICATION**

(43) Date of publication:
**14.01.2026 Bulletin 2026/03**

(21) Application number: **25184191.2**

(22) Date of filing: **20.06.2025**

(51) International Patent Classification (IPC):
**G06N 10/20** (2022.01)    **G06N 10/60** (2022.01)
**G06N 10/70** (2022.01)    **G06F 8/41** (2018.01)

(52) Cooperative Patent Classification (CPC):
**G06N 10/70; G06N 10/20; G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.07.2024 JP 2024110253**

(71) Applicant: **FUJITSU LIMITED**
**Kawasaki-shi, Kanagawa 211-8588 (JP)**

(72) Inventor: **Ishii, Masatoshi**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, QUANTUM COMPUTATION SUPPORT METHOD, AND INFORMATION PROCESSING APPARATUS**

(57) An information processing apparatus generates a second quantum circuit by replacing a first two-qubit gate in a first quantum circuit with a first equivalent circuit including a second two-qubit gate that performs a gate operation for a phase rotation with a first rotation angle. The information processing apparatus generates a third quantum circuit by replacing the first two-qubit gate in the first quantum circuit with a second equivalent circuit including a third two-qubit gate that performs a gate operation for a phase rotation with a second rotation angle. The information processing apparatus causes a quantum computer to execute the second quantum circuit and the third quantum circuit, and outputs the mean of the execution results as the execution result of the first quantum circuit.

3a, 3b, 3c : FIRST TWO-QUBIT GATE (CRX GATE)
3d, 3e : FOURTH TWO-QUBIT GATE (CX GATE)
7a : SECOND TWO-QUBIT GATE (CONTROLLED-PHASE GATE (90))
8a : THIRD TWO-QUBIT GATE (CONTROLLED-PHASE GATE (-90))

FIG. 1

EP 4 679 334 A1

EP 4 679 334 A1

## Description

FIELD

The embodiments discussed herein relate to a computer program, a quantum computation support method, and an information processing apparatus.

BACKGROUND

Currently available quantum computers are of a type called noisy intermediate-scale quantum computer (NISQ) using superconducting qubits or trapped-ion qubits. In these quantum devices, the error rate is approximately 1%, and the number of qubits is approximately 10 to 100. Such a small-scale quantum computer is unable to completely correct errors. Therefore, it is important to perform quantum computations using quantum circuits configured to minimize errors.

A quantum computer implements single-qubit gates and two-qubit gates as quantum gates available to manipulate qubits. These quantum gates are called native gates. The types of two-qubit gates supported as native gates depend on the scheme of the quantum device employed in the quantum computer.

The gate fidelities of gate operations in quantum computers are not 100%. For this reason, in order to improve the computation accuracy, it is reasonable to reduce as much as possible the total number of quantum gates implemented in a quantum circuit device.

In NISQ devices, gate rotation angle over-rotation occurs. Therefore, coherent errors due to implemented quantum gates occur. This coherent errors may be amplified depending on a combination of circuits or a quantum state. In order to suppress such error amplification, quantum error mitigation is performed.

One of techniques for mitigating quantum errors caused due to coherent noise is a technique called randomized compiling (RC). RC is a technique for preventing maximum coherent errors by executing a plurality of equivalent circuits and averaging the resulting probabilities.

As a technique for generating a quantum circuit, for example, a technique relating to automated optimization of large-scale quantum circuits with continuous parameters has been proposed. A quantum circuit design program for reducing errors in quantum computation has also been proposed. In addition, a system for quantum computation using RC has also been proposed. See, for example, the following literatures. Japanese Laid-open Patent Publication No. 2021-503116 International Publication Pamphlet No. WO 2023/127022 U.S. Patent Application Publication No. 2019/0018721

RC enables quantum error mitigation that reduces the maximum value of coherent errors. However, two-qubit gates that are available in a quantum circuit to which RC is applied are limited to Clifford gates. For this reason, although the use of non-Clifford gates reduces the number of two-qubit gates, a quantum circuit using Clifford gates is used for quantum error mitigation, even if it results in a larger number of two-qubit gates. That is, since RC is conventionally not applicable to quantum circuits using non-Clifford gates, it is difficult to reduce the number of two-qubit gates in a quantum circuit to which the quantum error mitigation is applied.

SUMMARY

In one aspect, the present disclosure aims to enable quantum error mitigation in a quantum circuit using non-Clifford gates.

In one aspect, there is provided a computer program that causes a computer to perform a process including: generating a second quantum circuit by replacing a first two-qubit gate in a first quantum circuit including the first two-qubit gate with a first equivalent circuit including a second two-qubit gate, the first two-qubit gate being configured to perform a rotation gate operation around an X-axis on a second qubit depending on a state of a first qubit, the second two-qubit gate being configured to perform a gate operation for a phase rotation with a first rotation angle on the second qubit depending on the state of the first qubit; generating a third quantum circuit by replacing the first two-qubit gate in the first quantum circuit with a second equivalent circuit including a third two-qubit gate, the third two-qubit gate being configured to perform a gate operation for a phase rotation with a second rotation angle on the second qubit depending on the state of the first qubit; causing a quantum computer to execute the second quantum circuit and the third quantum circuit, the quantum computer being capable of executing the second two-qubit gate and the third two-qubit gate; and outputting a mean of an execution result of the second quantum circuit and an execution result of the third quantum circuit as an execution result of the first quantum circuit.

BRIEF DESCRIPTION OF DRAWINGS

2

FIG. 1 illustrates an example of a quantum computation support method according to a first embodiment;

FIG. 2 illustrates an example of a configuration of a quantum computing system;

FIG. 3 illustrates an example of hardware of a classical computer and a quantum computer;

FIG. 4 illustrates an example of quantum circuits generated by RC;

FIG. 5 illustrates an example of an equivalent circuit of a Toffoli gate;

FIG. 6 illustrates an example of equivalent circuits of a CRX(90) gate;

FIG. 7 illustrates an example of an equivalent circuit of the Toffoli gate, which is formed of Clifford gates;

FIG. 8 illustrates an example of a process of converting the Toffoli gate into an equivalent circuit using CX gates;

FIG. 9 illustrates an example of a process of converting the Toffoli gate into an equivalent circuit using CZ gates;

FIG. 10 illustrates a first example of an equivalent circuit of a CRX gate;

FIG. 11 illustrates a second example of an equivalent circuit of a CRX gate;

FIG. 12 illustrates an example of a process of converting the Toffoli gate into an equivalent circuit using non-Clifford gates;

FIG. 13 illustrates a first example of a quantum error mitigation technique for a CRX gate;

FIG. 14 illustrates a second example of a quantum error mitigation technique for a CRX gate;

FIG. 15 illustrates an example of a plurality of equivalent circuits of a CX gate;

FIG. 16 illustrates an example of functions of the classical computer;

FIG. 17 illustrates an example of a process of conversion into a plurality of quantum circuits;

FIG. 18 is a flowchart illustrating an example procedure for a quantum computation support process in the classical computer;

FIG. 19 is a flowchart illustrating an example procedure for a process of generating a plurality of quantum circuits;

FIG. 20 illustrates an example of a comparison result among noise mitigation techniques with respect to the influence of noise;

FIG. 21 illustrates an example of quantum circuits used in noise mitigation; and

FIG. 22 illustrates an example of simulation results in cases where different coherent noises are applied.

DESCRIPTION OF EMBODIMENTS

Hereinafter, embodiments will be described with reference to the drawings. A plurality of embodiments may be combined unless they exclude each other.

[First Embodiment]

A first embodiment provides a quantum computation support method that enables quantum error mitigation in the case where a quantum computer is caused to execute a quantum circuit using non-Clifford gates.

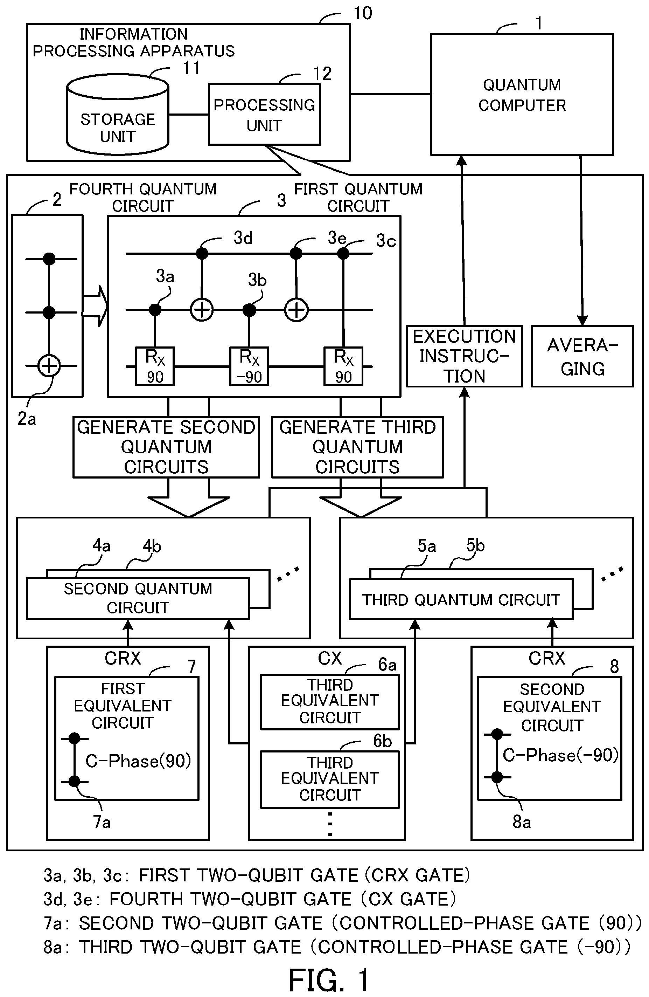

FIG. 1 illustrates an example of a quantum computation support method according to the first embodiment. FIG. 1 illustrates an information processing apparatus 10 that implements the quantum computation support method. The information processing apparatus 10 is able to implement the quantum computation support method according to the first embodiment by executing, for example, a predetermined quantum computation support program.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The storage unit 11 stores, for example, a fourth quantum circuit 2 representing a quantum computation to be executed by a quantum computer 1. The storage unit 11 also stores the quantum computation support program for converting the fourth quantum circuit 2 into a quantum circuit that is executable using native gates of the quantum computer 1 and causing the quantum computer 1 to execute the quantum circuit.

The processing unit 12 converts the fourth quantum circuit 2 into a quantum circuit that is executable using native gates of the quantum computer 1, according to the quantum computation support program, and causes the quantum computer 1 to execute the quantum circuit. For example, the processing unit 12 generates a first quantum circuit 3 based on the fourth quantum circuit 2 including a Toffoli gate 2a.

Specifically, the processing unit 12 generates the first quantum circuit 3 by replacing the Toffoli gate 2a in the fourth quantum circuit 2 with a circuit including fourth two-qubit gates 3d and 3e and first two-qubit gates 3a to 3c. Each first two-qubit gate 3a to 3c is a CRX gate that performs a rotation gate operation of 90 degrees or -90 degrees around the X-axis on a second qubit (target qubit) depending on the state of a first qubit (control qubit). Each fourth two-qubit gate 3d and 3e is a CX gate that flips the state of the target qubit depending on the state of the control qubit.

The first two-qubit gates 3a to 3c are non-Clifford gates. On the other hand, the fourth two-qubit gates 3d and 3e are Clifford gates. Therefore, it is possible to apply RC to the fourth two-qubit gates 3d and 3e for quantum error mitigation, but it is difficult to apply RC to the first two-qubit gates 3a to 3c.

To address this, the processing unit 12 generates second quantum circuits 4a, 4b, ... based on the first quantum circuit 3. For example, the processing unit 12 replaces each first two-qubit gate 3a to 3c in the first quantum circuit 3 with a first equivalent circuit 7 including a second two-qubit gate 7a. The second two-qubit gate 7a is a controlled-phase gate that performs a gate operation for a phase rotation with a first rotation angle on a second qubit (target qubit) depending on the state of a first qubit (control qubit).

In addition, when generating each of the second quantum circuits 4a, 4b, ..., the processing unit 12 also replaces each of the fourth two-qubit gates 3d and 3e, which are included in the first quantum circuit 3 and perform Clifford operations, with any one of a plurality of third equivalent circuits 6a, 6b, .... The plurality of third equivalent circuits 6a, 6b, ... are equivalent to each fourth two-qubit gate 3d and 3e, and differ in the configuration of single-qubit gates.

In the plurality of second quantum circuits 4a, 4b, ... generated in this manner, each first two-qubit gate in the first quantum circuit 3 has been replaced with the first equivalent circuit 7 including the second two-qubit gate 7a. In addition, in each of the plurality of second quantum circuits 4a, 4b, ..., each fourth two-qubit gate 3d and 3e has been replaced with any one of the plurality of third equivalent circuits 6a, 6b, ....

Furthermore, the processing unit 12 generates third quantum circuits 5a, 5b, ... based on the first quantum circuit 3. For example, the processing unit 12 replaces each first two-qubit gate 3a to 3c in the first quantum circuit 3 with a second equivalent circuit 8 including a third two-qubit gate 8a. The third two-qubit gate 8a is a controlled-phase gate that performs a gate operation for a phase rotation with a second rotation angle on a second qubit (target qubit) depending on the state of a first qubit (control qubit).

The second rotation angle is different from the first rotation angle. For example, when the first rotation angle is "90", the second rotation angle is "-90".

In addition, when generating each of the third quantum circuits 5a, 5b, ..., the processing unit 12 also replaces each fourth two-qubit gate 3d and 3e with any one of a plurality of third equivalent circuits 6a, 6b, ....

In the plurality of third quantum circuits 5a, 5b, ... generated in this manner, each first two-qubit gate 3a to 3c in the first quantum circuit 3 has been replaced with the second equivalent circuit 8 including the third two-qubit gate 8a. In addition, in each of the plurality of third quantum circuits 5a, 5b, ..., each fourth two-qubit gate 3d and 3e has been replaced with any one of the plurality of third equivalent circuits 6a, 6b, ....

The processing unit 12 causes the quantum computer 1 to execute the second quantum circuits 4a, 4b, ... and the third quantum circuits 5a, 5b, .... The quantum computer 1 is able to execute the second two-qubit gate 7a and the third two-qubit gate 8a as native gates. Then, the processing unit 12 outputs the mean of the execution results (for example, probability amplitudes) of the second quantum circuits 4a, 4b, ... and the execution results (for example, probability amplitudes) of the third quantum circuits 5a, 5b, ... as an execution result of the first quantum circuit 3 or the fourth quantum circuit 2.

In this way, the second quantum circuits 4a, 4b, ... and the third quantum circuits 5a, 5b, ..., which are equivalent to the first quantum circuit 3, are executed by the quantum computer 1, and the execution results are averaged, so that quantum errors are mitigated.

For example, each first two-qubit gate 3a to 3c is converted into a plurality of quantum circuits each using one of controlled-phase gates having rotation angles of "90" and "-90". As a result, quantum error mitigation is also achieved for the first two-qubit gates 3a to 3c, which are non-Clifford gates.

Quantum error mitigation by RC is applied to the fourth two-qubit gates 3d and 3e, which are Clifford gates. Thus, quantum error mitigation is achieved for the quantum circuit including both Clifford gates and non-Clifford gates.

The first quantum circuit 3 is generated by replacing the Toffoli gate 2a in the fourth quantum circuit 2 including the Toffoli gate 2a with a circuit including the fourth two-qubit gates 3d and 3e and the first two-qubit gates 3a to 3c. By doing so, it becomes possible to perform quantum error mitigation in a quantum computation involving the fourth quantum circuit 2 including the Toffoli gate.

[Second Embodiment]

A second embodiment provides a quantum computing system that enables appropriate quantum error mitigation even in a quantum circuit using non-Clifford gates.

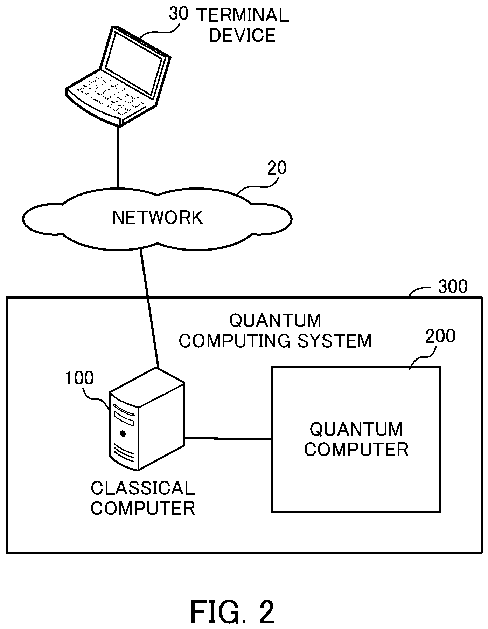

FIG. 2 illustrates an example of a configuration of the quantum computing system. The quantum computing system 300 is, for example, a computer system that performs computation based on the principles of quantum mechanics. The quantum computing system 300 includes a classical computer 100 and a quantum computer 200. The classical computer 100 is a von Neumann computer. The quantum computer 200 is a non-von Neumann computer that performs quantum computation by applying quantum gates to qubits. For example, the quantum computer 200 performs quantum computation using a superconducting qubit device.

A terminal device 30 is connected to the classical computer 100 via a network 20. The terminal device 30 is a computer that is used by a user who requests the quantum computing system 300 to perform quantum computation. The classical computer 100 receives a quantum computation request including a quantum circuit from, for example, the terminal device 30. The quantum circuit represents a sequence of gate operations on qubits through the arrangement of elements such as gates. A qubit is a bit that is able to represent a superposition state of the "0" state and the "1" state.

When receiving the quantum computation request from the terminal device 30, the classical computer 100 instructs the quantum computer 200 to perform gate operations on qubits according to the quantum circuit included in the received quantum computation request. The classical computer 100 receives the measurement results of the qubits from the quantum computer 200.

The quantum computer 200 performs the gate operations on the qubits in response to the instruction received from the classical computer 100. The quantum computer 200 measures the states of the qubits and transmits the measurement results to the classical computer 100.

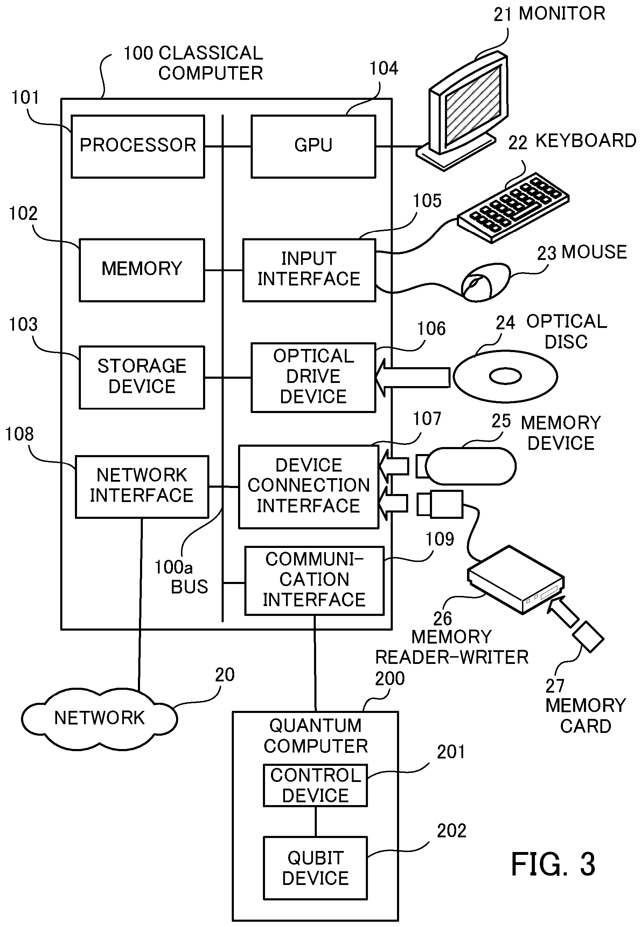

FIG. 3 illustrates an example of hardware of the classical computer and the quantum computer. The entire classical computer 100 is controlled by a processor 101. A memory 102 and a plurality of peripheral devices are connected to the processor 101 via a bus 100a. The classical computer 100 may be a multiprocessor system having a plurality of processors. A set of processors in a multiprocessor system may be referred to as the processor 101. The processor 101 may be referred to as processor circuitry. Each of the plurality of processors is able to perform some or all of the plurality of processes performed by the classical computer 100. Two or more of a plurality of related processes among the plurality of processes may be performed by different processors. The processor 101 is, for example, a central processing unit (CPU), a micro processing unit (MPU), or a digital signal processor (DSP). At least a part of the functions implemented by the processor 101 executing the program may be implemented by an electronic circuit such as an application specific integrated circuit (ASIC) or a programmable logic device (PLD).

The memory 102 is used as a main storage device of the classical computer 100. The memory 102 temporarily stores at least part of operating system (OS) programs and application programs to be executed by the processor 101. The memory 102 also stores various data used for processing by the processor 101. As the memory 102, for example, a volatile semiconductor storage device such as a random access memory (RAM) is used.

The peripheral devices coupled to the bus 100a include a storage device 103, a graphics processing unit (GPU) 104, an input interface 105, an optical drive device 106, a device connection interface 107, a network interface 108, and a communication interface 109.

The storage device 103 electrically or magnetically writes and reads data to and from a built-in storage medium. The storage device 103 is used as an auxiliary storage device of the classical computer 100. The storage device 103 stores OS programs, application programs, and various data. As the storage device 103, for example, a hard disk drive (HDD) or a solid state drive (SSD) may be used.

The GPU 104 is an arithmetic device that performs image processing, and is also called a graphic controller. A monitor 21 is connected to the GPU 104. The GPU 104 displays images on the screen of the monitor 21 in accordance with instructions from the processor 101. Examples of the monitor 21 include a display device using organic electro luminescence (EL) and a liquid crystal display device.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive device 106 reads data recorded on an optical disc 24 or writes data to the optical disc 24 using laser light or the like. The optical disc 24 is a portable storage medium on which data is recorded so as to be readable by reflection of light. The optical disc 24 may be a digital versatile disc (DVD), a DVD-RAM, a compact disc read only memory (CD-ROM), a CD-recordable (CD-R), CD-rewritable (CD-RW), or the like.

The device connection interface 107 is an interface for connecting peripheral devices to the classical computer 100. For example, a memory device 25 and a memory reader-writer 26 may be connected to the device connection interface 107. The memory device 25 is a storage medium having a function of communicating with the device connection interface 107. The memory reader-writer 26 is a device that writes data to a memory card 27 or reads data from the memory card 27. The memory card 27 is a card-type storage medium.

The network interface 108 is connected to the network 20. The network interface 108 is connected to another computer (including the terminal device 30), not illustrated, via the network 20.

The communication interface 109 is connected to the quantum computer 200. The communication interface 109 communicates with the quantum computer 200. For example, the communication interface 109 instructs the quantum computer 200 to execute a quantum circuit.

The classical computer 100 is able to implement the processing functions of the second embodiment with the above-described hardware. The information processing apparatus 10 described in the first embodiment is also able to be implemented with hardware similar to that of the classical computer 100 illustrated in FIG. 3.

The classical computer 100 implements the processing functions of the second embodiment by executing a program stored on a computer-readable storage medium, for example. The program describing the processing contents to be executed by the classical computer 100 may be stored on various storage media. For example, the program to be executed by the classical computer 100 may be stored on the storage device 103. The processor 101 loads at least part of the program from the storage device 103 into the memory 102 and executes the program. The program to be executed by the classical computer 100 may be stored on a portable storage medium such as the optical disc 24, the memory device 25, or the memory card 27. The program stored on the portable storage medium becomes executable after being installed in the storage device 103 under the control of the processor 101, for example. Alternatively, the processor 101 may read the program directly from the portable storage medium and execute the program.

The quantum computer 200 includes a control device 201 and a qubit device 202. The control device 201 performs gate operations on qubits in the qubit device 202 according to an instruction from the classical computer 100. For example, the control device 201 performs gate operations on qubits by irradiating the qubits with microwaves having a predetermined frequency.

The qubit device 202 has a plurality of qubits. The qubit device includes, for example, superconducting qubits. The qubit device 202 may also be referred to as a quantum processing unit (QPU).

A user who uses the quantum computing system 300 generates, for example, a quantum circuit for solving a problem to be solved through quantum computation, using the terminal device 30. When the user instructs the terminal device 30 to execute quantum computation, the terminal device 30 transmits a quantum computation request including the generated quantum circuit to the quantum computing system 300.

In the quantum computing system 300, the classical computer 100 causes the quantum computer 200 to execute the quantum computation based on the quantum circuit in response to the quantum computation request. At this time, the classical computer 100 converts the quantum circuit to be executed, into a quantum circuit using executable quantum gates according to the hardware specifications of the quantum computer 200 (such as native gates executable by the qubit device) .

With the above quantum computing system 300, the quantum computation based on the quantum circuit specified by the user is performed. At this time, the quantum computing system 300 performs the quantum computation based on the quantum circuit in such a manner that errors caused due to unpredictable large-scale noise are reduced.

RC is a quantum error mitigation technique for reducing errors.

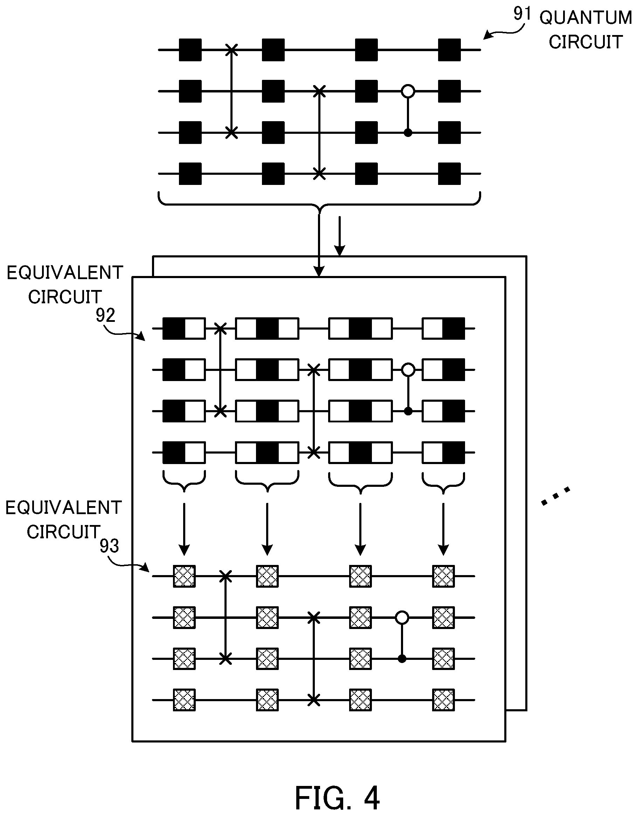

FIG. 4 illustrates an example of quantum circuits generated by RC. In RC, an entirely equivalent quantum circuit (equivalent circuit 92) is generated by inserting single-qubit gates into a quantum circuit 91 to be executed in quantum computation. The types of the single-qubit gates to be inserted are randomly determined, provided that the overall equivalence is maintained. In FIG. 4, the single-qubit gates included in the quantum circuit 91 are represented by black rectangles, and the single-qubit gates inserted in the equivalent circuit 92 are represented by white rectangles. It is possible to combine adjacent single-qubit gates. Therefore, an equivalent circuit 93 is generated by replacing a plurality of adjacent single-qubit gates in the equivalent circuit 92 with one single-qubit gate.

In RC, a plurality of equivalent circuits are generated with the same procedure as for the equivalent circuit 93. The plurality of generated equivalent circuits are each equivalent to the quantum circuit 91 as a whole, but are different in the types of single-qubit gates included or in the sequence of gate operations.

Quantum noise varies depending on the quantum state of each qubit. Furthermore, it is difficult to perform all noise measurements and corrections in advance. Therefore, in RC, quantum computation is executed based on each of a plurality of equivalent circuits that include random single-qubit gates and are equivalent to the quantum circuit 91, and the outputs of the quantum computation are averaged. The averaging makes it possible to prevent errors occurring in the quantum computation under a worst-case noise condition. That is, quantum error mitigation is achieved.

RC is applicable to the case where the two-qubit gates in the quantum circuit 91 are Clifford gates. Therefore, in order to apply RC, the quantum gates other than single-qubit gates in a quantum circuit for solving a problem to be solved are converted into Clifford gates acting on no more than two qubits. For example, the Toffoli gate is a quantum gate that is frequently used in a quantum circuit. The following describes, with respect to the gate operation of the Toffoli gate, equivalent circuits of the Toffoli gate for the case of performing quantum error mitigation by applying RC.

The Toffoli gate is a three-qubit gate. Quantum gates executable in the quantum computer 200 are single-qubit gates and two-qubit gates. Therefore, the Toffoli gate is converted into an equivalent circuit in which single-qubit gates and two-qubit gates are combined.

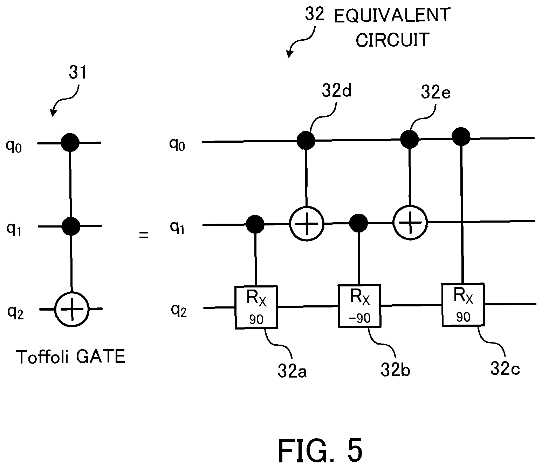

FIG. 5 illustrates an example of an equivalent circuit of a Toffoli gate. The Toffoli gate 31 is a quantum gate that uses two control qubits and one target qubit. When the states of the control qubits are both "1", the Toffoli gate 31 performs a gate operation of flipping the state of the target qubit.

The Toffoli gate 31 is convertible into an equivalent circuit 32 in which a plurality of two-qubit gates are combined. The equivalent circuit 32 is formed of three CRX gates 32a to 32c and two CX gates 32d and 32e.

Each CRX gate 32a to 32c is a quantum gate that performs a rotation gate operation of a predetermined rotation angle around the X-axis on the target qubit when the state of the control qubit is "1". The gate operation of a CRX($\theta$) gate is expressed by Equation (1), where "$\theta$" denotes a rotation angle.

$$CRX(\theta) = \begin{bmatrix} 1 & 0 & 0 & 0 \\ 0 & 1 & 0 & 0 \\ 0 & 0 & \cos\left(\frac{\theta}{2}\right) & -i\sin\left(\frac{\theta}{2}\right) \\ 0 & 0 & -i\sin\left(\frac{\theta}{2}\right) & \cos\left(\frac{\theta}{2}\right) \end{bmatrix} \tag{1}$$

The rotation angles of the CRX gates 32a and 32c are "90 degrees", and the gate operation of the CRX(90) gate is expressed by Equation (2).

$$CRX(90) = \begin{bmatrix} 1 & 0 & 0 & 0 \\ 0 & 1 & 0 & 0 \\ 0 & 0 & \frac{\sqrt{2}}{2} & -\frac{\sqrt{2}i}{2} \\ 0 & 0 & -\frac{\sqrt{2}i}{2} & \frac{\sqrt{2}}{2} \end{bmatrix} \tag{2}$$

The rotation angle of the CRX gate 32b is "-90 degrees", and the gate operation of the CRX(-90) gate is expressed by Equation (3).

$$CRX(-90) = \begin{bmatrix} 1 & 0 & 0 & 0 \\ 0 & 1 & 0 & 0 \\ 0 & 0 & \frac{\sqrt{2}}{2} & \frac{\sqrt{2}i}{2} \\ 0 & 0 & \frac{\sqrt{2}i}{2} & \frac{\sqrt{2}}{2} \end{bmatrix} \tag{3}$$

Among the quantum gates included in the equivalent circuit 32, each CX gate 32d and 32e is a Clifford gate, and the gate operation thereof is expressed by Equation (4).

$$CX = \begin{bmatrix} 1 & 0 & 0 & 0 \\ 0 & 1 & 0 & 0 \\ 0 & 0 & 0 & 1 \\ 0 & 0 & 1 & 0 \end{bmatrix} \tag{4}$$

On the other hand, the CRX gates 32a to 32c are non-Clifford gates. Therefore, in order to apply RC, each CRX gate 32a to 32c is converted into an equivalent circuit using Clifford gates.

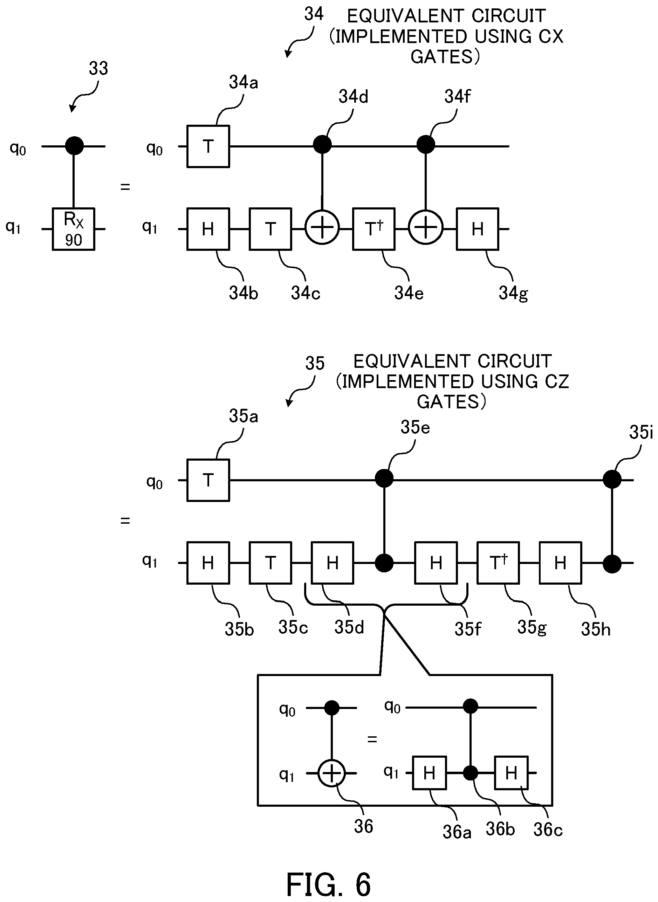

FIG. 6 illustrates an example of equivalent circuits of a CRX(90) gate. A CRX(90) gate 33 may be implemented using CX gates or CZ gates. The gate operation of a CX gate is expressed by Equation (4) as mentioned above. The gate operation of a CZ gate is expressed by Equation (5).

$$CZ = \begin{bmatrix} 1 & 0 & 0 & 0 \\ 0 & 1 & 0 & 0 \\ 0 & 0 & 1 & 0 \\ 0 & 0 & 0 & -1 \end{bmatrix} \qquad (5)$$

The CRX(90) gate 33 is replaceable with an equivalent circuit 34 using CX gates. Here, the control qubit of the CRX(90) gate 33 is a qubit "$q_0$", and the target qubit thereof is a qubit "$q_1$".

In the equivalent circuit 34, a T gate 34a is first placed on the qubit "$q_0$", and an H gate 34b is placed on the qubit "$q_1$". Next, a T gate 34c is placed on the qubit "$q_1$". Next, a CX gate 34d is placed on the qubit "$q_0$" as the control qubit and the qubit "$q_1$" as the target qubit. Next, a T$^\dagger$ gate 34e is placed on the qubit "$q_1$". Next, a CX gate 34f is placed on the qubit "$q_0$" as the control qubit and the qubit "$q_1$" as the target qubit. Finally, an H gate 34g is placed on the qubit "$q_1$".

A CX gate 36 is replaceable with a circuit in which H gates 36a and 36c are placed before and after the target qubit of a CZ gate 36b. By applying this replacement to the equivalent circuit 34, an equivalent circuit 35 of the CRX(90) gate is obtained using CZ gates.

In the equivalent circuit 35, first, a T gate 35a is placed on the qubit "$q_0$", and an H gate 35b is placed on the qubit "$q_1$". Next, a T gate 35c and an H gate 35d are placed on the qubit "$q_1$". Next, a CZ gate 35e to be applied to the qubit "$q_0$" and the qubit "$q_1$" is placed. Next, an H gate 35f, a T$^\dagger$ gate 35g, and an H gate 35h are placed on the qubit "$q_1$". Finally, a CZ gate 35i to be applied to the qubit "$q_0$" and the qubit "$q_1$" is placed.

When the gate operations of H gates are performed on one qubit consecutively, the state of the qubit returns to the original state. Therefore, two consecutive H gates in a quantum circuit are removable. The H gate 34g in the equivalent circuit 34 becomes consecutive with an H gate following the CZ gate 35i introduced by the replacement of the CX gate 34f with the CZ gate 35i. Therefore, these H gates are removed.

As described above, the CRX(90) gate 33 may be implemented using either the equivalent circuit 34 using CX gates or the equivalent circuit 35 using CZ gates. In many superconducting quantum devices, CX gates or CZ gates are native gates. Therefore, the quantum computer 200 in which CX gates or CZ gates are native gates is able to perform the gate operation of the CRX(90) gate using either the equivalent circuit 34 or 35.

As illustrated in FIG. 6, each of the equivalent circuits 34 and 35 includes two two-qubit gates. Likewise, in the case where a CRX(-90) gate is replaced with an equivalent circuit, the equivalent circuit includes two two-qubit gates.

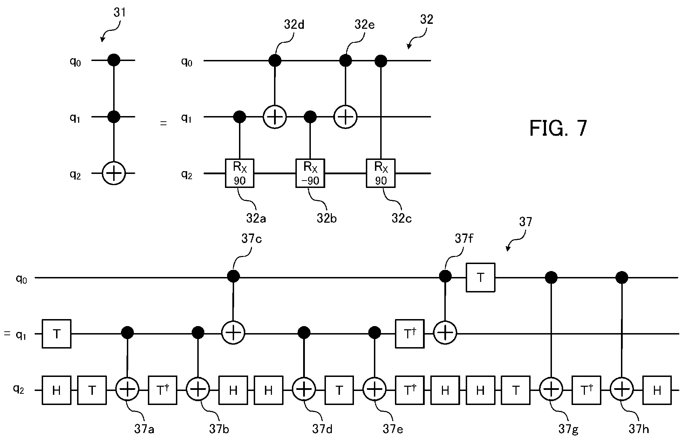

FIG. 7 illustrates an example of an equivalent circuit of the Toffoli gate, which is formed of Clifford gates. An equivalent circuit 37 is obtained by replacing each CRX gate 32a to 32c included in the equivalent circuit 32 of the Toffoli gate 31 with a circuit using Clifford gates. The equivalent circuit 37 includes eight CX gates 37a to 37h.

A part of the equivalent circuit 37 is replaceable with another circuit. Through this circuit replacement, it becomes possible to reduce the number of two-qubit gates.

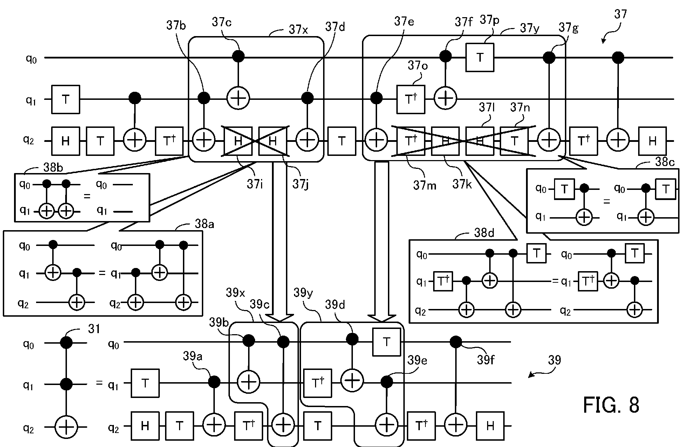

FIG. 8 illustrates an example of a process of converting the Toffoli gate into an equivalent circuit using CX gates. For example, a partial circuit 37x in the equivalent circuit 37 includes consecutive H gates 37i and 37j. These H gates 37i and 37j are removable. In addition, two CX gates 37c and 37d in the partial circuit 37x are convertible into three CX gates, as depicted in a conversion example 38a.

When the CX gates 37c and 37d are converted according to the conversion example 38a, the CX gate 37b in the partial circuit 37x is followed by a CX gate that performs the same gate operation. As depicted in a conversion example 38b, when CX gates that perform the same gate operation are consecutive, these CX gates are removable. As a result, the partial circuit 37x in the equivalent circuit 37 is converted into two CX gates 39b and 39c, as depicted in a partial circuit 39x.

A partial circuit 37y in the equivalent circuit 37 includes consecutive H gates 37k and 37l. These H gates 37k and 37l are removable. When the H gates 37k and 37l are removed, a T$^\dagger$ gate 37m and a T gate 37n become consecutive. In the case where the T$^\dagger$ gate 37m and the T gate 37n are consecutive, these quantum gates are also removable.

Further, as depicted in a conversion example 38c, the order of a CX gate and the order of a T gate are swappable. This is true when the T gate is a T$^\dagger$ gate. That is, the order of a CX gate 37e and the order of a T$^\dagger$ gate 37o in the partial circuit 37y are swappable. In addition, the order of a T gate 37p and the order of a CX gate 37g are swappable. In the partial circuit 37y after the swapping, the three CX gates 37e to 37g are convertible into two CX gates as depicted in a conversion example 38d. As a result, the partial circuit 37y in the equivalent circuit 37 is convertible into a partial circuit 39y including two CX gates 39d and 39e.

As a result of the above-described conversion process, the equivalent circuit 37 of the Toffoli gate 31 is converted into an equivalent circuit 39. The equivalent circuit 39 includes six CX gates 39a to 39f. That is, in the case where the Toffoli gate 31 is implemented using the CX gates 39a to 39f, the number of two-qubit gates is six.

In some cases, not CX gates but CZ gates are native gates of the quantum computer 200. In this case, the Toffoli gate 31 is converted into an equivalent circuit using CZ gates.

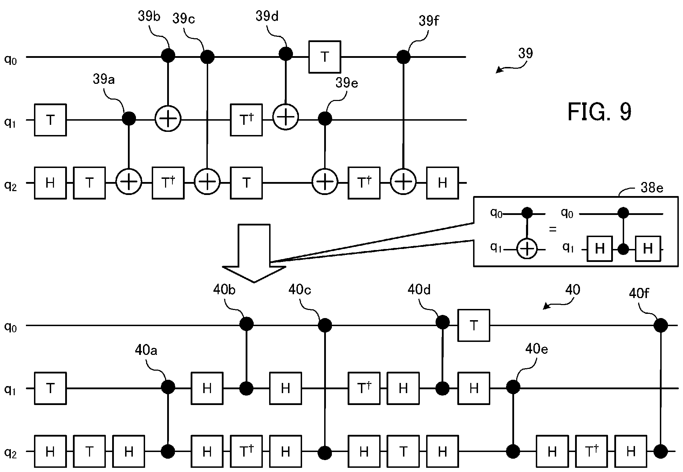

FIG. 9 illustrates an example of a process of converting the Toffoli gate into an equivalent circuit using CZ gates. Each CX gate 39a to 39f is replaceable with two H gates and a CZ gate, as depicted in a conversion example 38e. By converting all the CX gates 39a to 39f in the equivalent circuit 39 according to the conversion example 38e, an equivalent circuit 40 of the Toffoli gate is obtained using CZ gates 40a to 40f.

The equivalent circuit 40 includes the six CZ gates 40a to 40f. That is, in the case where the Toffoli gate 31 is implemented using the CZ gates 40a to 40f, the number of two-qubit gates is six.

The conversions of the Toffoli gate 31 into the equivalent circuits 39 and 40 illustrated in FIGS. 8 and 9 assume a case where two-qubit gates are limited to Clifford gates. If non-Clifford gates are allowed to use as two-qubit gates, it is also possible to convert the Toffoli gate 31 into an equivalent circuit with a smaller number of two-qubit gates.

Native gates of a superconducting device include the CZ gate (controlled-Z gate) and the C-Phase gate (controlled-phase rotation gate). The CZ gate is a two-qubit gate that flips the phase of the state of the target qubit if the control qubit is in the state $|1\rangle$. The C-Phase gate is a two-qubit gate that rotates the phase of the state of the target qubit by a predetermined rotation angle if the control qubit is in the state $|1\rangle$.

In the case where the Toffoli gate 31 is converted into an equivalent circuit using non-Clifford gates, for example, each CRX gate 32a to 32c is converted into an equivalent circuit using a C-Phase gate. The gate operation of a C-Phase gate with a rotation angle "$\theta$" is expressed by the following equation.

$$C - Phase(\theta) = \begin{bmatrix} 1 & 0 & 0 & 0 \\ 0 & 1 & 0 & 0 \\ 0 & 0 & 1 & 0 \\ 0 & 0 & 0 & e^{i\theta} \end{bmatrix} \qquad (6)$$

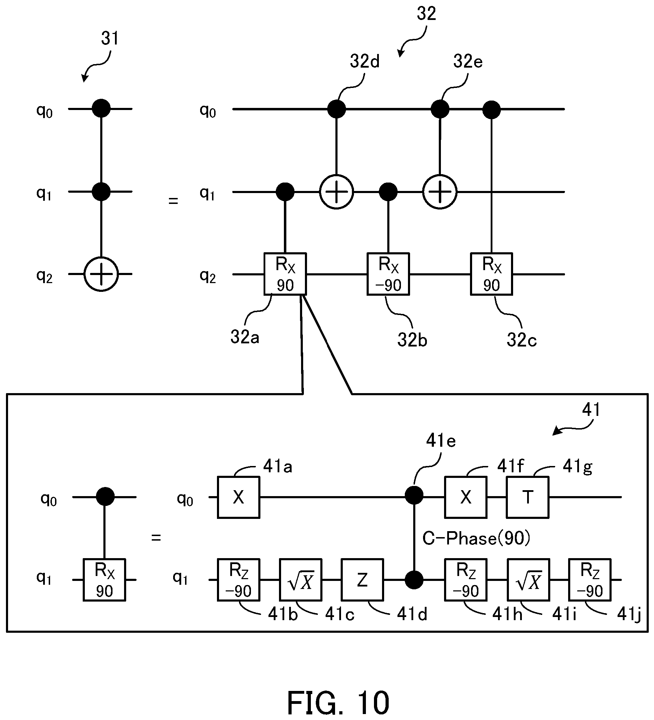

FIG. 10 illustrates a first example of an equivalent circuit of a CRX gate. The CRX gate 32a included in the equivalent circuit 32 of the Toffoli gate 31 is convertible into an equivalent circuit 41. Assume here that the control qubit of the CRX gate 32a is a qubit "$q_0$", and the target qubit thereof is a qubit "$q_1$".

First, an X gate 41a is placed on the qubit "$q_0$" in the equivalent circuit 41. On the qubit "$q_1$" in the equivalent circuit 41, an RZ gate 41b with a rotation angle of "-90", a root X gate 41c, and a Z gate 41d are placed. Next, a C-Phase gate 41e with a rotation angle of "90" is placed on the qubit "$q_0$" as the control qubit and the qubit "$q_1$" as the target qubit. The gate operation of the C-Phase gate 41e with the rotation angle of "90" is expressed by the following equation.

$$C - Phase(90) = \begin{bmatrix} 1 & 0 & 0 & 0 \\ 0 & 1 & 0 & 0 \\ 0 & 0 & 1 & 0 \\ 0 & 0 & 0 & i \end{bmatrix} \qquad (7)$$

After the C-Phase gate 41e, an X gate 41f and a T gate 41g are placed on the qubit "$q_0$" in the equivalent circuit 41. Further, an RZ gate 41h with a rotation angle of "-90", a root X gate 41i, and an RZ gate 41j with a rotation angle of "-90" are placed on the qubit "$q_1$" in the equivalent circuit 41.

In this manner, the CRX gate 32a is convertible into the equivalent circuit 41 using the C-Phase gate 41e. The CRX gate 32c is also likewise convertible into the equivalent circuit 41.

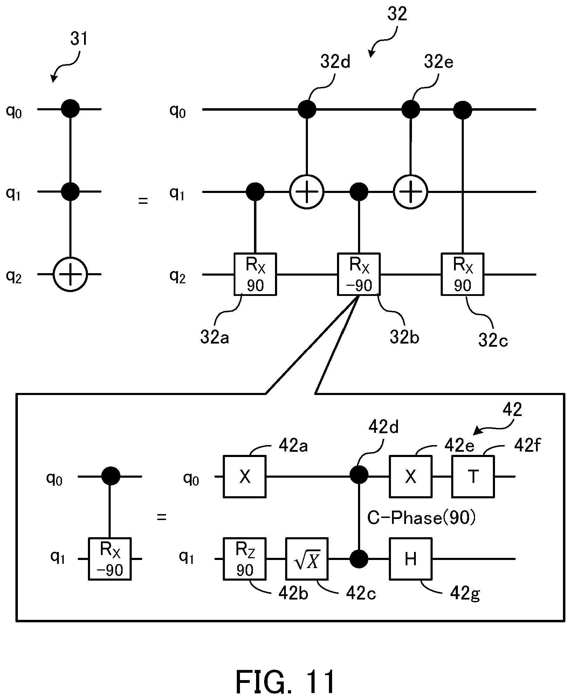

FIG. 11 illustrates a second example of an equivalent circuit of a CRX gate. The CRX gate 32b included in the equivalent circuit 32 of the Toffoli gate 31 is convertible into an equivalent circuit 42. Assume here that the control qubit of the CRX gate 32b is a qubit "$q_0$", and the target qubit thereof is a qubit "$q_1$".

First, an X gate 42a is placed on the qubit "$q_0$" in the equivalent circuit 42. An RZ gate 42b with a rotation angle of "90" and a root X gate 42c are placed on the qubit "$q_1$" in the equivalent circuit 42. Next, a C-Phase gate 42d with a rotation angle of "90" is placed on the qubit "$q_0$" as the control qubit and the qubit "$q_1$" as the target qubit.

After the C-Phase gate 42d, an X gate 42e and a T gate 42f are placed on the qubit "$q_0$" in the equivalent circuit 42. An H gate 42g is placed on the qubit "$q_1$" in the equivalent circuit 42.

By using the equivalent circuits 41 and 42 illustrated in FIGS. 10 and 11, the Toffoli gate 31 is convertible into an equivalent circuit using non-Clifford gates.

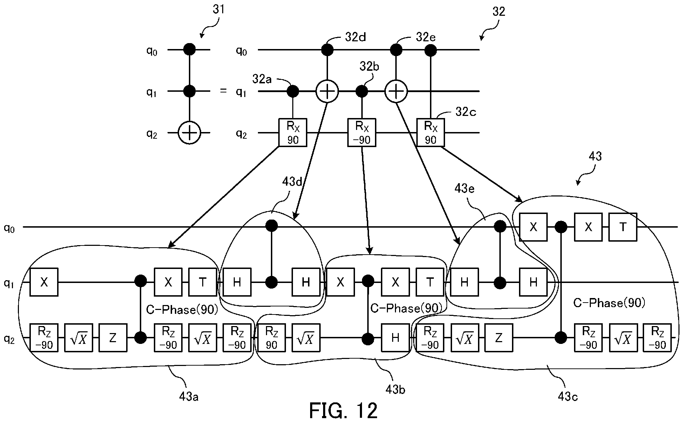

FIG. 12 illustrates an example of a process of converting the Toffoli gate into an equivalent circuit using non-Clifford gates. The equivalent circuit 32 of the Toffoli gate 31 is convertible into an equivalent circuit 43 using C-Phase gates.

The CRX gate 32a of the equivalent circuit 32 is converted into a partial circuit 43a of the equivalent circuit 43. The CRX gate 32b of the equivalent circuit 32 is converted into a partial circuit 43b of the equivalent circuit 43. The CRX gate 32c of the equivalent circuit 32 is converted into a partial circuit 43c of the equivalent circuit 43. The CX gate 32d of the equivalent circuit 32 is converted into a partial circuit 43d of the equivalent circuit 43. The CX gate 32e of the equivalent circuit 32 is converted into a partial circuit 43e of the equivalent circuit 43.

By converting the Toffoli gate 31 into the equivalent circuit 43 in this manner, it becomes possible to implement the Toffoli gate 31 with a total of five native two-qubit gates: two CZ gates and three C-Phase gates. That is, the use of non-Clifford gates makes it possible to reduce the number of two-qubit gates used to implement the Toffoli gate 31, compared to the case where no non-Clifford gates are used.

Such a reduction in the number of two-qubit gates leads to a reduction in the occurrence of errors in quantum computation. However, in the case where non-Clifford gates are used, it is not possible to apply RC to the entire circuit.

To address this, when the classical computer 100 generates a quantum circuit to be executed by the quantum computer 200, the classical computer 100 applies RC only to two-qubit gates that are Clifford gates. For CRX gates, which are non-Clifford gates, the classical computer 100 employs a method different from RC to perform quantum error mitigation.

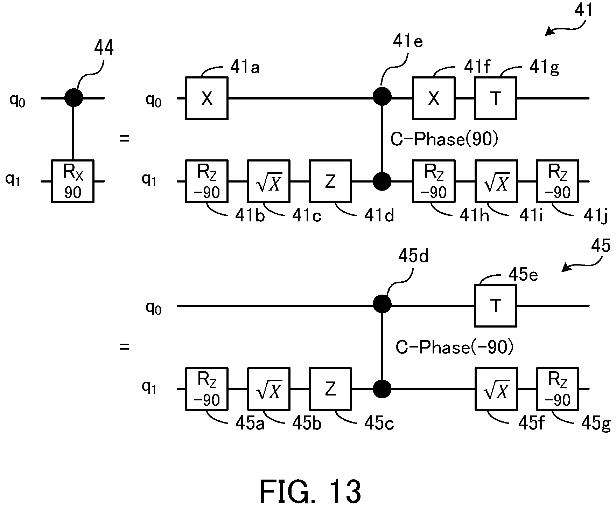

FIG. 13 illustrates a first example of a quantum error mitigation technique for a CRX gate. For example, it is assumed that the control qubit of a CRX gate 44 with a rotation angle of "90" is a qubit "$q_0$", and the target qubit thereof is a qubit "$q_1$". In this case, the CRX gate 44 is convertible into the equivalent circuit 41 using the C-Phase gate 41e with the rotation angle of "90", and is also convertible into an equivalent circuit 45 using a C-Phase gate 45d with a rotation angle of "-90".

In the equivalent circuit 45, first, an RZ gate 45a with a rotation angle of "-90", a root X gate 45b, and a Z gate 45c are placed on the qubit "$q_1$". Next, the C-Phase gate 45d with a rotation angle of "-90" to be applied to the qubits "$q_0$" and "$p_1$" is placed. The gate operation of the C-Phase gate 45d with the rotation angle "-90" is expressed by the following equation.

$$C - Phase(-90) = \begin{bmatrix} 1 & 0 & 0 & 0 \\ 0 & 1 & 0 & 0 \\ 0 & 0 & 1 & 0 \\ 0 & 0 & 0 & -i \end{bmatrix} \qquad (8)$$

After the C-Phase gate 45d, a T gate 45e is placed on the qubit "$q_0$" in the equivalent circuit 45. In addition, a root X gate 45f and an RZ gate 45g with a rotation angle of "-90" are placed on the qubit "$q_1$" in the equivalent circuit 45.

As described above, the CRX gate 44 with the rotation angle "90" has the two equivalent circuits 41 and 45. By causing the quantum computer 200 to execute both the two equivalent circuits 41 and 45 and averaging the measurement results, it is possible to achieve quantum error mitigation in the gate operation of the CRX gate 44 with the rotation angle "90".

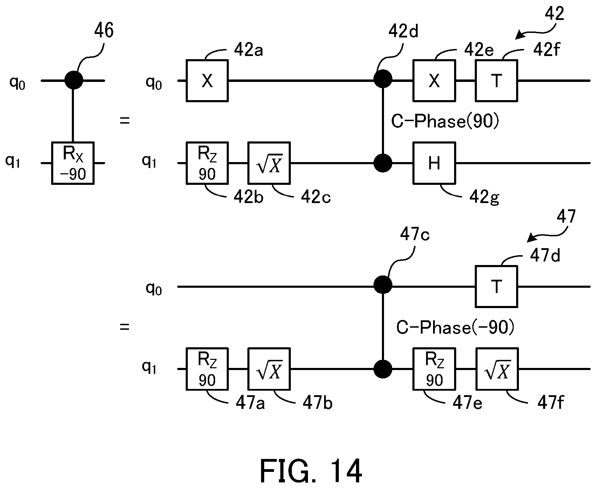

FIG. 14 illustrates a second example of a quantum error mitigation technique for a CRX gate. For example, it is assumed that the control qubit of a CRX gate 46 with a rotation angle of "-90" is a qubit "$q_0$" and the target qubit thereof is a qubit "$q_1$". In this case, the CRX gate 46 is convertible into the equivalent circuit 42 using the C-Phase gate 42d with the rotation angle of "90", and is also convertible into an equivalent circuit 47 using a C-Phase gate 47c with a rotation angle of "-90".

In the equivalent circuit 47, first, an RZ gate 47a with a rotation angle of "90" and a root X gate 47b are placed on the qubit "$q_1$". Next, a C-Phase gate 47c with a rotation angle of "-90" is placed on the qubit "$q_0$" as the control qubit and the qubit "$q_1$" as the target qubit.

After the C-Phase gate 47c, a T gate 47d is placed on the qubit "$q_0$" in the equivalent circuit 47. Further, an RZ gate 47e with a rotation angle of "90" and a root X gate 47f are placed on the qubit "$q_1$" in the equivalent circuit 47.

As described above, the CRX gate 46 with the rotation angle "-90" has the two equivalent circuits 42 and 47. By causing the quantum computer 200 to execute both the two equivalent circuits 42 and 47 and averaging the measurement results, it is possible to achieve quantum error mitigation in the gate operation of the CRX gate 46 with the rotation angle of "-90".

For the CX gates 32d and 32e included in the equivalent circuit 32 of the Toffoli gate 31, it is possible to perform quantum error mitigation by means of RC.

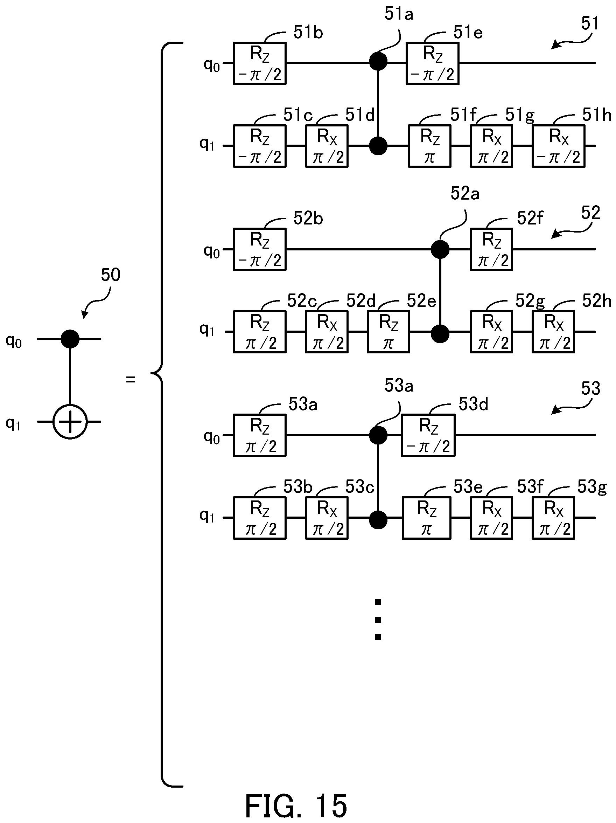

FIG. 15 illustrates an example of a plurality of equivalent circuits of a CX gate. In equivalent circuits 51, 52, 53, ... of a CX gate 50 illustrated in FIG. 15, single-qubit gates 51b to 51h, 52b to 52h, 53b to 53g, ... are placed on both sides of CZ gates 51a, 52a, 53a, ..., respectively. The single-qubit gates 51b to 51h, 52b to 52h, 53b to 53g, ... are Clifford gates. The single-qubit gates 51b to 51h, 52b to 52h, 53b to 53g, ... in the equivalent circuits 51, 52, 53, ... are randomly configured under the condition that the overall operation of each equivalent circuit is equivalent to the CX gate 50.

By implementing each CX gate 32d and 32e included in the equivalent circuit 32 of the Toffoli gate 31 using one of the plurality of equivalent circuits 51, 52, 53, ..., as illustrated in FIG. 15, it becomes possible to achieve quantum error mitigation by RC for the gate operations of the CX gates 32d and 32e.

In the manner described above, it is possible to achieve quantum error mitigation in a quantum circuit in which both Clifford gates and non-Clifford gates are included. This enables non-Clifford gates to be included in a quantum circuit to which the quantum error mitigation is applied. As a result, the depth of the quantum circuit is reduced, thereby reducing the number of errors that occur.

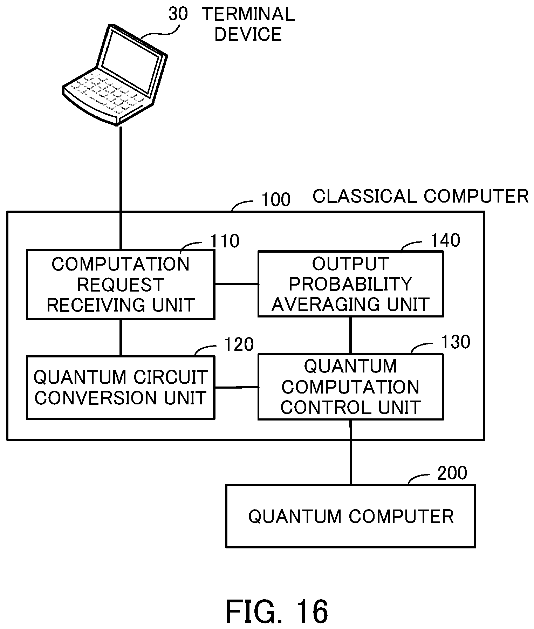

FIG. 16 illustrates an example of functions of the classical computer. The classical computer 100 includes a computation request receiving unit 110, a quantum circuit conversion unit 120, a quantum computation control unit 130, and an output probability averaging unit 140.

The computation request receiving unit 110 receives a quantum computation request from the terminal device 30. The computation request includes, for example, a quantum circuit including gates acting on three or more qubits. The computation request receiving unit 110 requests the quantum circuit conversion unit 120 to convert the received quantum circuit. In addition, when receiving a computation result from the output probability averaging unit 140, the computation request receiving unit 110 transmits the computation result to the terminal device 30 that has transmitted the computation request.

The quantum circuit conversion unit 120 converts the quantum circuit received from the computation request receiving unit 110 into a plurality of quantum circuits using native gates that are executable by the quantum computer 200. At this time, the quantum circuit conversion unit 120 converts each CX gate into a plurality of equivalent circuits using CZ gates through RC. The quantum circuit conversion unit 120 also converts each CRX gate into a plurality of equivalent circuits using C-Phase gates with different rotation angles. The quantum circuit conversion unit 120 generates a plurality of quantum circuits equivalent to the received quantum circuit by combining a plurality of equivalent circuits generated from the two-qubit gates. Then, the quantum circuit conversion unit 120 transmits the plurality of generated quantum circuits to the quantum computation control unit 130.

The quantum computation control unit 130 instructs the quantum computer 200 to perform gate operations on qubits according to each of the plurality of quantum circuits received from the quantum circuit conversion unit 120. Each time the execution of gate operations according to a quantum circuit is complete, the quantum computation control unit 130 receives a measurement result regarding the states of the qubits from the quantum computer 200. The measurement result is a probability distribution of the states (bit string) of the qubits. The quantum computation control unit 130 transmits the measurement results obtained from the plurality of quantum circuits, to the output probability averaging unit 140.

The output probability averaging unit 140 calculates, as the probability of each state, a value obtained by averaging the probability amplitudes for each qubit state obtained from the plurality of quantum circuits. Then, the output probability averaging unit 140 calculates a solution to the problem to be solved, on the basis of the probability distributions for the states, and transmits the solution to the computation request receiving unit 110 as a result of the quantum computation.

The functions of each element illustrated in FIG. 16 may be implemented by, for example, causing the classical computer 100 to execute a program module corresponding to the element.

When a quantum computation request is input from the terminal device 30 to the above-described quantum computing system 300, the quantum circuit conversion unit 120 of the classical computer 100 converts the quantum circuit, which represents a quantum computation procedure, into circuits using native gates of the quantum computer 200. For example, the quantum circuit conversion unit 120 decomposes a quantum gate in the quantum circuit to be executed into an equivalent circuit using CX gates and Toffoli gates. The quantum circuit conversion unit 120 further decomposes each Toffoli gate into the equivalent circuit 32 in which CX gates and CRX gates are combined (see FIG. 5).

The quantum circuit conversion unit 120 also converts each CX gate into a plurality of equivalent circuits having different circuit configurations, and converts each CRX gate into a plurality of equivalent circuits using C-Phase gates with different rotation angles.

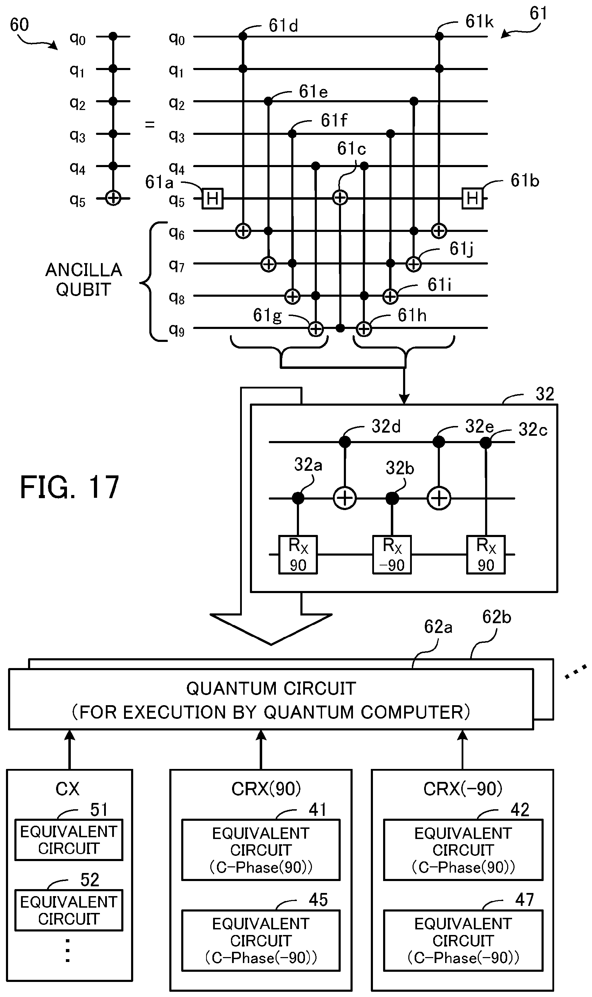

FIG. 17 illustrates an example of a process of conversion into a plurality of quantum circuits. For example, in the case of causing the quantum computer 200 to perform the gate operation of a C5X gate 60, the quantum circuit conversion unit 120 converts the C5X gate 60 into an equivalent circuit 61 using ancilla qubits. The equivalent circuit 61 is formed of two H gates 61a and 61b, one CX gate 61c, and eight Toffoli gates 61d to 61k. The quantum circuit conversion unit 120 further converts each of the Toffoli gates 61d to 61k into the equivalent circuit 32.

Then, the quantum circuit conversion unit 120 generates a plurality of quantum circuits 62a, 62b, ... equivalent to the C5X gate 60, in which each Toffoli gate 61d to 61k has been converted into the equivalent circuit 32. For each of the plurality of quantum circuits 62a, 62b, ..., the quantum circuit conversion unit 120 converts each CX gate 61c, 32d, and 32e into any one of the plurality of equivalent circuits 51, 52, .... In addition, for each of the plurality of quantum circuits 62a, 62b, ..., the quantum circuit conversion unit 120 converts each CRX gate 32a and 32c with a rotation angle of "90" into either one of the plurality of equivalent circuits 41 or 45. Further, for each of the plurality of quantum circuits 62a, 62b, ..., the quantum circuit conversion unit 120 converts each CRX gate 32b with a rotation angle of "-90" into either one of the plurality of equivalent circuits 42 or 47.

In each of the plurality of quantum circuits 62a, 62b, ..., consecutive single-qubit gates may be integrated into one single-qubit gate. Any integrated single-qubit gate may be implemented as rotation gate operations "$R_Z(\varphi) \cdot Rx(90) \cdot R_Z(\theta) \cdot R_X(90) \cdot R_Z(\lambda)$" using three Euler angles ($\theta$, $\varphi$, $\lambda$).

Hereinafter, a sequence of quantum gates that perform the rotation gate operations "$R_Z(\varphi) \cdot R_X(90) \cdot R_Z(\theta) \cdot R_X(90) \cdot R_Z(\lambda)$" is referred to as ZXZXZ gates. In currently available NISQ devices, $R_Z$ rotation gates (rotation operations around the Z-axis) with arbitrary rotation angles are implemented, but $R_X$ rotation gates (rotation operations around the X-axis) are limited to 90 degrees or 180 degrees. Therefore, the quantum circuit conversion unit 120 converts a sequence of the gate operations of consecutive single-qubit gates into the ZXZXZ gates, thereby implementing the gate operations of arbitrary single-qubit gates.

As a result, the plurality of quantum circuits 62a, 62b, ... having different quantum gate configurations, which are equivalent to the C5X gate 60 and are executable by the quantum computer 200, are generated. By causing the quantum computer 200 to execute each of the plurality of quantum circuits 62a, 62b, ... and obtaining, as a computation result, the mean of the probability amplitudes for each state obtained as the measurement results, it is possible to obtain the computation result in which the influence of errors is averaged.

The following describes, in detail, a procedure for a quantum computation support process that is performed by the classical computer 100 for quantum computation involving quantum error mitigation.

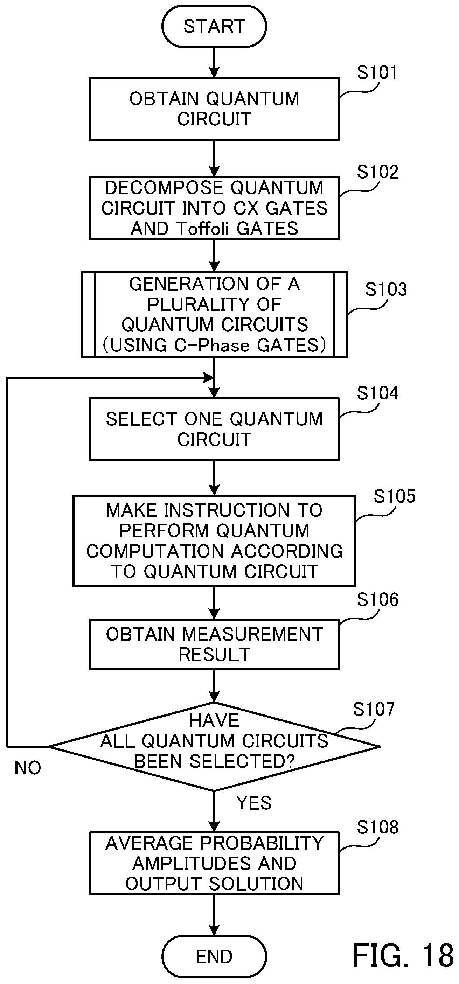

FIG. 18 is a flowchart illustrating an example procedure for a quantum computation support process that is performed by the classical computer. Hereinafter, the process illustrated in FIG. 18 will be described in order of step numbers.

[Step S101] When receiving a quantum computation request from the terminal device 30, the computation request receiving unit 110 obtains a quantum circuit corresponding to a problem to be solved. For example, the quantum circuit is included in the received quantum computation request. In this case, the computation request receiving unit 110 obtains the quantum circuit from the quantum computation request. The computation request receiving unit 110 transmits the obtained quantum circuit to the quantum circuit conversion unit 120.

[Step S102] The quantum circuit conversion unit 120 decomposes the obtained quantum circuit into a circuit in which CX gates and Toffoli gates are combined.

[Step S103] The quantum circuit conversion unit 120 generates a plurality of quantum circuits having different quantum gate configurations, which are equivalent to the obtained quantum circuit and are executable by the quantum computer 200. In each generated quantum circuit, each Toffoli gate has been converted into an equivalent circuit using C-Phase gates. The quantum circuit conversion unit 120 transmits the plurality of generated quantum circuits to the quantum computation control unit 130.

[Step S104] The quantum computation control unit 130 selects one unprocessed quantum circuit from among the plurality of generated quantum circuits.

[Step S105] The quantum computation control unit 130 instructs the quantum computer 200 to perform quantum computation according to the selected quantum circuit. For example, the quantum computation control unit 130 determines the timing of irradiating qubits with microwaves on the basis of the quantum gates of the selected quantum circuit, and instructs the quantum computer 200 to apply microwave irradiation at the determined timing.

[Step S106] When the quantum computation along the quantum circuit is complete, the quantum computation control unit 130 obtains the measurement result representing the states of the operated qubits from the quantum computer 200.

[Step S107] The quantum computation control unit 130 determines whether all of the plurality of generated quantum circuits have been selected. If all the quantum circuits have been selected, the quantum computation control unit 130 advances the process to step S108. If there is any quantum circuit that is not yet selected, the quantum computation control unit 130 advances the process to step S104.

[Step S108] The quantum computation control unit 130 obtains the mean value of the probability amplitudes for each qubit state based on the measurement results obtained by executing the plurality of quantum circuits. Then, the quantum computation control unit 130 obtains a solution to the problem to be solved, on the basis of the mean values of the probability amplitudes obtained for the qubit states, and transmits the solution to the computation request receiving unit 110. The computation request receiving unit 110 transmits the obtained solution to the terminal device 30.

In the manner described above, quantum computation with reduced quantum errors is achieved. The following describes a process of generating a plurality of quantum circuits.

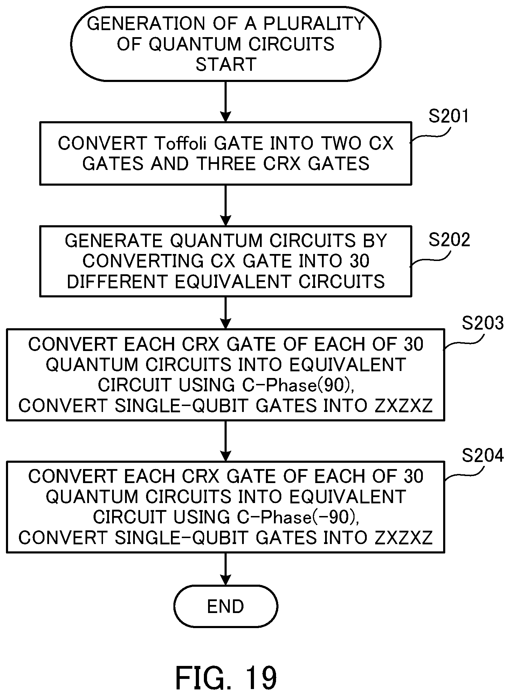

FIG. 19 is a flowchart illustrating an example procedure for a process of generating a plurality of quantum circuits. Hereinafter, the process illustrated in FIG. 19 will be described in order of step numbers.

[Step S201] The quantum circuit conversion unit 120 converts each Toffoli gate included in a quantum circuit to be executed into an equivalent circuit that is formed of two CX gates and three CRX gates.

[Step S202] The quantum circuit conversion unit 120 generates 30 quantum circuits by converting each CX gate into 30 equivalent circuits having different configurations. For example, the quantum circuit conversion unit 120 generates 30 replicas of the quantum circuit to be executed. Then, the quantum circuit conversion unit 120 randomly selects, for each of the replicated quantum circuits, an equivalent circuit to be applied from among the plurality of equivalent circuits of the CX gate, and converts each of all CX gates of the quantum circuit into the selected equivalent circuit.

[Step S203] The quantum circuit conversion unit 120 generates 30 quantum circuits in which each of all CRX gates in the 30 quantum circuits generated in step S202 is implemented using a C-Phase gate (C-Phase(90)) with a rotation angle of "90". At this time, in each generated quantum circuit, the quantum circuit conversion unit 120 converts consecutive single-qubit gates into ZXZXZ gates.

[Step S204] The quantum circuit conversion unit 120 generates 30 quantum circuits in which each of all CRX gates in the 30 quantum circuits generated in step S202 are implemented using a C-Phase gate (C-Phase(-90)) with a rotation angle of "-90". At this time, in each generated quantum circuit, the quantum circuit conversion unit 120 converts consecutive single-qubit gates into ZXZXZ gates.

Thus, even for a CRX gate, which is a non-Clifford gate, it is possible to execute the CRX gate by executing a plurality of equivalent circuits having different configurations and averaging the execution results, as in the case of RC. As a result, quantum computation in which the influence of noise is averaged is achieved.

As an evaluation index for the overall influence of noise, a total variation distance (TVD) may be used. TVD is a value based on the sum of the differences between an ideal probability without noise and a probability with noise, and is represented by the following Equation (9).

$$d_{TV}(\mathcal{P}, \mathcal{P}_{ideal}) = \frac{1}{2} \sum_{x \in X} |\mathcal{P}(x) - \mathcal{P}_{ideal}(x)| \qquad (9)$$

$P_{ideal}(x)$ denotes an occurrence probability of a string of the values of qubits (bit string x) in an ideal situation (situation without noise). In addition, P(x) denotes an occurrence probability of the bit string x measured by actual measurement or simulation. In Equation (9), for each bit string x belonging to a set X of all possible bit strings, the difference between the probability with noise and the probability without noise is calculated. Then, one half of the sum of these differences is set as the TVD. A smaller TVD value indicates that the influence of noise is smaller.

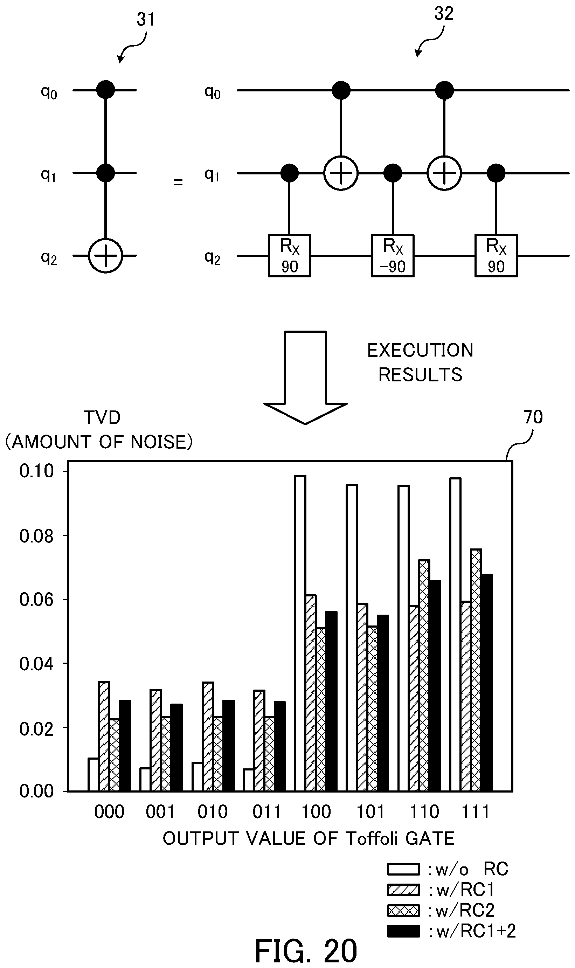

FIG. 20 illustrates an example of a comparison result among noise mitigation techniques with respect to the influence of noise. A graph 70 compares noise mitigation techniques applied when the equivalent circuit 32 of the Toffoli gate 31 is executed, in terms of TVD. The horizontal axis of the graph 70 represents the output value of the Toffoli gate, and the vertical axis thereof represents TVD. The four vertical bars for each output value of the Toffoli gate each correspond to a noise mitigation technique.

The leftmost vertical bar represents TVD when no noise mitigation technique is applied (w/o RC). The second vertical bar from the left represents TVD when the CX gate is converted into a random equivalent circuit and the CRX gate is converted into an equivalent circuit using a C-Phase gate with a rotation angle of "90" (w/RC1). The third vertical bar from the left represents TVD when the CX gate is converted into a random equivalent circuit and the CRX gate is converted into an equivalent circuit using a C-Phase gate with a rotation angle of "-90" (w/RC2). The rightmost vertical bar represents TVD when the mean value of "w/RC1" and "w/RC2" is set as a measurement result (w/RC1+2).

As seen in the graph 70, the TVD of "w/RC1+2" has an intermediate value between those of "w/RC1" and "w/RC2", with respect to each output value. That is, the influence of noise is averaged. As a result, it is possible to prevent noise from becoming excessively large for specific output values, and it is also possible to keep the amount of noise (TVD value) within a certain range. As a result, when the quantum circuit is executed, the amount of noise may be suppressed within an expected range, thereby suppressing the occurrence of errors.

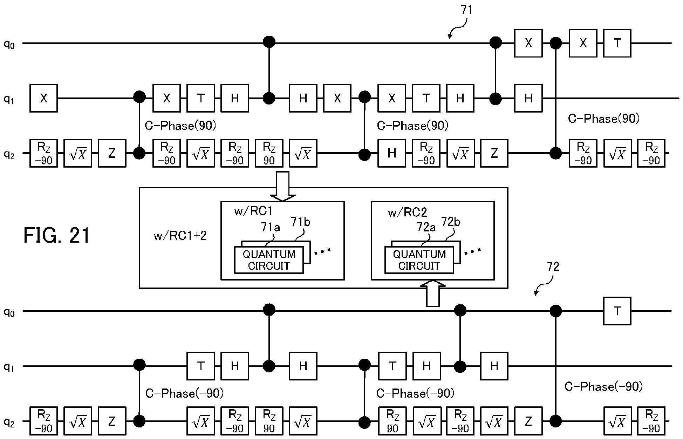

FIG. 21 illustrates an example of quantum circuits used in noise mitigation. For example, a quantum circuit 71 implements a gate operation equivalent to the Toffoli gate using C-Phase gates with a rotation angle of "90". A quantum circuit 72 implements a gate operation equivalent to the Toffoli gate using C-Phase gates with a rotation angle of "-90".

By converting each CZ gate in the quantum circuit 71 into a plurality of random equivalent circuits through RC, a plurality of quantum circuits 71a, 71b, ... each equivalent to the Toffoli gate are obtained. In the noise mitigation technique referred to as "w/RC1", the computation results obtained by causing the quantum computer 200 to execute the quantum circuits 71a, 71b, ... are averaged.

By converting each CZ gate in the quantum circuit 72 into a plurality of random equivalent circuits through RC, a plurality of quantum circuits 72a, 72b, ... each equivalent to the Toffoli gate are obtained. In the noise mitigation technique referred as "w/RC2", the computation results obtained by causing the quantum computer 200 to execute the quantum circuits 72a, 72b, ... are averaged.

In the noise mitigation technique referred to as "w/RC1+2", the computation results obtained by causing the quantum computer 200 to execute the quantum circuits 71a, 71b, ... used in "w/RC1" and the quantum circuits 72a, 72b, ...

used in "w/RC2" are averaged.

The following describes simulation results obtained in cases where different coherent noises are applied at the time of execution of the quantum circuits illustrated in FIG. 21 will be described.

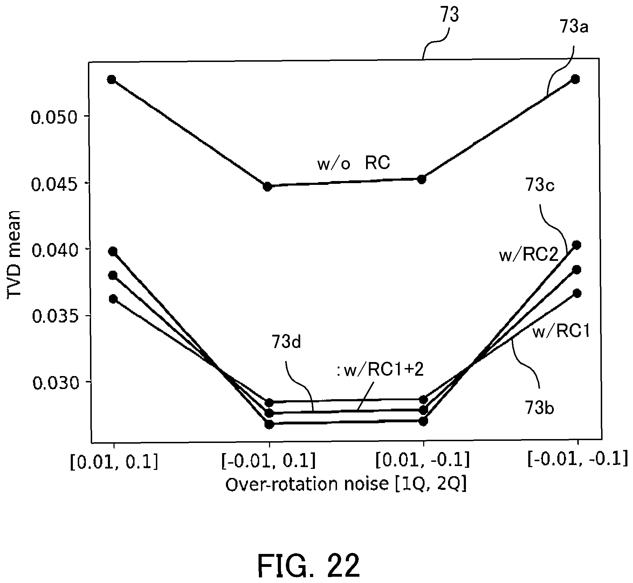

FIG. 22 illustrates an example of simulation results in cases where different coherent noises are applied. In the simulation, over-rotation noise is applied as coherent noise. Coherent noise refers to noise that occurs due to insufficient calibration of a device or another, and the amount of noise increases depending on a quantum circuit or a quantum state. In the case where the amount and direction of the coherent noise are unknown, noise may become large. When the mount of the noise is the maximum, the computational error becomes large. Therefore, in a qubit device, even if the noise is not minimized, averaging the noise is beneficial.

In a graph 73, the horizontal axis represents combinations of the over-rotation noise directions for single-qubit gates and two-qubit gates, and the vertical axis represents the TVD mean values for the combinations of the over-rotation noise directions. A polygonal line 73a represents the TVD mean values obtained when no noise mitigation technique is applied (w/o RC). A polygonal line 73b represents the TVD mean values obtained when the CX gate is converted into a random equivalent circuit and the CRX gate is converted into an equivalent circuit using a C-Phase gate with a rotation angle of "90" (w/RC1). A polygonal line 73c represents the TVD mean values obtained when the CX gate is converted into a random equivalent circuit and the CRX gate is converted into an equivalent circuit using a C-Phase gate with a rotation angle of "-90" (w/RC2). A polygonal line 73d represents the TVD mean values obtained by obtaining the mean value of the results of "w/RC1" and "w/RC2" as a measurement result (w/RC1+2).

It is found from the graph 73 that, the case of "w/RC1+2" is able to prevent the worst-case TVD mean value.

As described above, by adopting "w/RC1+2" as a quantum error mitigation technique, the number of two-qubit gates is reduced, compared to the case where only Clifford gates are used, and quantum error mitigation is also achieved. It is thus possible to prevent the worst-case coherent noise value.

Although the embodiments have been illustrated, the configuration of each unit described in each embodiment may be replaced with another configuration having the same function. In addition, any other components or processes may be added. Furthermore, any two or more configurations (features) of the above-described embodiments may be combined.

In one aspect, it is possible to achieve quantum error mitigation in a quantum circuit using non-Clifford gates.

**Claims**

1.  A computer program that causes a computer to perform a process comprising:

    generating a second quantum circuit (4a, 4b, ...) by replacing a first two-qubit gate (3a to 3c) in a first quantum circuit (3) including the first two-qubit gate (3a to 3c) with a first equivalent circuit (7) including a second two-qubit gate (7a), the first two-qubit gate being configured to perform a rotation gate operation around an X-axis on a second qubit depending on a state of a first qubit, the second two-qubit gate being configured to perform a gate operation for a phase rotation with a first rotation angle on the second qubit depending on the state of the first qubit;
    generating a third quantum circuit (5a, 5b, ...) by replacing the first two-qubit gate (3a to 3c) in the first quantum circuit (3) with a second equivalent circuit (8) including a third two-qubit gate (8a), the third two-qubit gate being configured to perform a gate operation for a phase rotation with a second rotation angle on the second qubit depending on the state of the first qubit;
    causing a quantum computer (1) to execute the second quantum circuit (4a, 4b, ...) and the third quantum circuit (5a, 5b, ...), the quantum computer being capable of executing the second two-qubit gate (7a) and the third two-qubit gate (8a); and
    outputting a mean of an execution result of the second quantum circuit (4a, 4b, ...) and an execution result of the third quantum circuit (5a, 5b, ...) as an execution result of the first quantum circuit (3).

2.  The computer program according to claim 1, wherein

    the generating of the second quantum circuit (4a, 4b, ...) includes generating the second quantum circuit (4a, 4b, ...) including the second two-qubit gate (7a) with the first rotation angle of 90 degrees, and
    the generating of the third quantum circuit (5a, 5b, ...) includes generating the third quantum circuit (5a, 5b, ...) including the third two-qubit gate (8a) with the second rotation angle of -90 degrees.

3.  The computer program according to claim 1, wherein the process further includes generating the first quantum circuit (3) by replacing a Toffoli gate (2a) in a fourth quantum circuit (2) including the Toffoli gate (2a) with a circuit in which a fourth two-qubit gate (3d, 3e) and the first two-qubit gate (3a to 3c) are combined, the fourth two-qubit gate being configured to flip a state of a target qubit depending on a state of a control qubit.

4. The computer program according to claim 1, wherein

the generating of the second quantum circuit (4a, 4b, ...) includes generating the second quantum circuit (4a, 4b, ...) in plurality by converting a fourth two-qubit gate (3d, 3e) in the first quantum circuit (3) into a plurality of third equivalent circuits (6a, 6b, ...) having different configurations of single-qubit gates, the fourth two-qubit gate being configured to perform a Clifford operation, each of the plurality of third equivalent circuits being equivalent to the fourth two-qubit gate (3d, 3e), and

the generating of the third quantum circuit (5a, 5b, ...) includes generating the third quantum circuit (5a, 5b, ...) in plurality by converting the fourth two-qubit gate (3d, 3e) into the plurality of third equivalent circuits (6a, 6b, ...).

5. A quantum computation support method executed by a computer, the quantum computation support method comprising:

generating a second quantum circuit (4a, 4b, ...) by replacing a first two-qubit gate (3a to 3c) in a first quantum circuit (3) including the first two-qubit gate (3a to 3c) with a first equivalent circuit (7) including a second two-qubit gate (7a), the first two-qubit gate being configured to perform a rotation gate operation around an X-axis on a second qubit depending on a state of a first qubit, the second two-qubit gate being configured to perform a gate operation for a phase rotation with a first rotation angle on the second qubit depending on the state of the first qubit;

generating a third quantum circuit (5a, 5b, ...) by replacing the first two-qubit gate (3a to 3c) in the first quantum circuit (3) with a second equivalent circuit (8) including a third two-qubit gate (8a), the third two-qubit gate being configured to perform a gate operation for a phase rotation with a second rotation angle on the second qubit depending on the state of the first qubit;

causing a quantum computer (1) to execute the second quantum circuit (4a, 4b, ...) and the third quantum circuit (5a, 5b, ...), the quantum computer being capable of executing the second two-qubit gate (7a) and the third two-qubit gate (8a); and

outputting a mean of an execution result of the second quantum circuit (4a, 4b, ...) and an execution result of the third quantum circuit (5a, 5b, ...) as an execution result of the first quantum circuit (3).

6. An information processing apparatus (10) comprising:
processing means (12) for

generating a second quantum circuit (4a, 4b, ...) by replacing a first two-qubit gate (3a to 3c) in a first quantum circuit (3) including the first two-qubit gate (3a to 3c) with a first equivalent circuit (7) including a second two-qubit gate (7a), the first two-qubit gate being configured to perform a rotation gate operation around an X-axis on a second qubit depending on a state of a first qubit, the second two-qubit gate being configured to perform a gate operation for a phase rotation with a first rotation angle on the second qubit depending on the state of the first qubit;

generating a third quantum circuit (5a, 5b, ...) by replacing the first two-qubit gate (3a to 3c) in the first quantum circuit (3) with a second equivalent circuit (8) including a third two-qubit gate (8a), the third two-qubit gate being configured to perform a gate operation for a phase rotation with a second rotation angle on the second qubit depending on the state of the first qubit;

causing a quantum computer (1) to execute the second quantum circuit (4a, 4b, ...) and the third quantum circuit (5a, 5b, ...), the quantum computer being capable of executing the second two-qubit gate (7a) and the third two-qubit gate (8a); and

outputting a mean of an execution result of the second quantum circuit (4a, 4b, ...) and an execution result of the third quantum circuit (5a, 5b, ...) as an execution result of the first quantum circuit (3).

3a, 3b, 3c: FIRST TWO-QUBIT GATE (CRX GATE)
3d, 3e: FOURTH TWO-QUBIT GATE (CX GATE)
7a: SECOND TWO-QUBIT GATE (CONTROLLED-PHASE GATE (90))
8a: THIRD TWO-QUBIT GATE (CONTROLLED-PHASE GATE (-90))

FIG. 1

30 TERMINAL DEVICE

20

NETWORK

300

QUANTUM COMPUTING SYSTEM

200

100

QUANTUM COMPUTER

CLASSICAL COMPUTER

FIG. 2

FIG. 3

91 QUANTUM
CIRCUIT

EQUIVALENT
CIRCUIT
92

EQUIVALENT
CIRCUIT
93

FIG. 4

FIG. 5

34 EQUIVALENT CIRCUIT (IMPLEMENTED USING CX GATES)

35 EQUIVALENT CIRCUIT (IMPLEMENTED USING CZ GATES)

FIG. 6

FIG. 7

FIG. 8

FIG. 9

FIG. 10

FIG. 11

FIG. 12

FIG. 13

FIG. 14

FIG. 15

FIG. 16

FIG. 17

START

OBTAIN QUANTUM CIRCUIT — S101

DECOMPOSE QUANTUM CIRCUIT INTO CX GATES AND Toffoli GATES — S102

GENERATION OF A PLURALITY OF QUANTUM CIRCUITS (USING C-Phase GATES) — S103

SELECT ONE QUANTUM CIRCUIT — S104

MAKE INSTRUCTION TO PERFORM QUANTUM COMPUTATION ACCORDING TO QUANTUM CIRCUIT — S105

OBTAIN MEASUREMENT RESULT — S106

HAVE ALL QUANTUM CIRCUITS BEEN SELECTED? — S107

NO

YES

AVERAGE PROBABILITY AMPLITUDES AND OUTPUT SOLUTION — S108

END

FIG. 18

GENERATION OF A PLURALITY
OF QUANTUM CIRCUITS
START

CONVERT Toffoli GATE INTO TWO CX
GATES AND THREE CRX GATES
S201

GENERATE QUANTUM CIRCUITS BY
CONVERTING CX GATE INTO 30
DIFFERENT EQUIVALENT CIRCUITS
S202

CONVERT EACH CRX GATE OF EACH OF 30
QUANTUM CIRCUITS INTO EQUIVALENT
CIRCUIT USING C-Phase(90),
CONVERT SINGLE-QUBIT GATES INTO ZXZXZ
S203

CONVERT EACH CRX GATE OF EACH OF 30
QUANTUM CIRCUITS INTO EQUIVALENT
CIRCUIT USING C-Phase(-90),
CONVERT SINGLE-QUBIT GATES INTO ZXZXZ
S204

END

FIG. 19

FIG. 20

FIG. 21

FIG. 22

| | Europäisches Patentamt<br>European Patent Office<br>Office européen des brevets | **EUROPEAN SEARCH REPORT** | **Application Number**<br><br>EP 25 18 4191 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EMANUELE G DALLA TORRE ET AL: "Simulating long-range coherence of atoms and photons in quantum computers", ARXIV.ORG, CORNELL UNIVERSITY LIBRARY, 201 OLIN LIBRARY CORNELL UNIVERSITY ITHACA, NY 14853, 16 June 2022 (2022-06-16), XP091252578, * page 4 * | 1-6 | INV.<br>G06N10/20<br>G06N10/60<br>G06N10/70<br>G06F8/41 |
| X | DAS POULAMI ET AL: "The Imitation Game: Leveraging CopyCats for Robust Native Gate Selection in NISQ Programs", 2023 IEEE INTERNATIONAL SYMPOSIUM ON HIGH-PERFORMANCE COMPUTER ARCHITECTURE (HPCA), IEEE, 25 February 2023 (2023-02-25), pages 787-801, XP034315222, DOI: 10.1109/HPCA56546.2023.10071025 [retrieved on 2023-03-24] * page 787 - page 789 * | 1-6 | |
| A | LACHEZAR S GEORGIEV: "Topologically protected quantum gates for computation with non-Abelian anyons in the Pfaffian quantum Hall state", ARXIV.ORG, CORNELL UNIVERSITY LIBRARY, 201 OLIN LIBRARY CORNELL UNIVERSITY ITHACA, NY 14853, 5 July 2006 (2006-07-05), XP080244690, DOI: 10.1103/PHYSREVB.74.235112 * page 4 - page 5 * | 1-6 | TECHNICAL FIELDS SEARCHED (IPC)<br><br>G06N<br>G06F |

-/--

The present search report has been drawn up for all claims

| Place of search | Date of completion of the search | Examiner |
|---|---|---|
| The Hague | 10 November 2025 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 18 4191

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIAN LENG ET AL: "Quantum Advantage of Noisy Grover's Algorithm", ARXIV.ORG, CORNELL UNIVERSITY LIBRARY, 201 OLIN LIBRARY CORNELL UNIVERSITY ITHACA, NY 14853, 19 June 2023 (2023-06-19), XP091542575, * page 7 * | 1-6 | |
| A | DANIEL GRIER ET AL: "The Classification of Clifford Gates over Qubits", ARXIV.ORG, CORNELL UNIVERSITY LIBRARY, 201 OLIN LIBRARY CORNELL UNIVERSITY ITHACA, NY 14853, 29 November 2021 (2021-11-29), XP091085540, * page 11 * | 1-6 | |
| A | ENDO SUGURU ET AL: "Practical Quantum Error Mitigation for Near-Future Applications", PHYSICAL REVIEW X, vol. 8, no. 3, 1 July 2018 (2018-07-01), XP093260793, US ISSN: 2160-3308, DOI: 10.1103/PhysRevX.8.031027 * abstract * * figure 4 * | 1-6 | **TECHNICAL FIELDS SEARCHED (IPC)** |

The present search report has been drawn up for all claims

| Place of search | Date of completion of the search | Examiner |
|---|---|---|
| The Hague | 10 November 2025 | Bohn, Patrice |

**REFERENCES CITED IN THE DESCRIPTION**

**Patent documents cited in the description**

- JP 2021503116 A
- WO 2023127022 A
- US 20190018721